# EUROPEAN PATENT SPECIFICATION

(11) **EP 2 015 911 B1**
(45) Date of publication and mention of the grant of the patent: **29.09.2010**
(21) Application number: 07728182.2
(22) Date of filing: 17.04.2007
(51) Int. Cl.: B29C 41/04

(54) **COLOURED ROTOMOULDED ARTICLES**
FARBIGE ROTATIONSGEFORMTE ARTIKEL
ARTICLES COLORÉS ROTOMOULÉS

(30) Priority: 09.05.2006 EP 06113684
(43) Date of publication of application: 21.01.2009
(73) Proprietor: TOTAL PETROCHEMICALS RESEARCH FELUY, 7181 Seneffe (Feluy) (BE)
(72) Inventor: MAZIERS, Eric, B-7180 Seneffe (BE)
(74) Representative: Leyder, Francis
(86) International application number: PCT/EP2007/053717
(87) International publication number: WO 2007/128654

(56) References cited:
- EP-A- 1 357 135
- EP-A- 1 600 475
- US-A- 3 891 597
- US-A- 5 530 055

## Description

The present invention discloses coloured rotomoulded articles prepared from a dry blend of polyethylene and pigments.

Because of the nature of rotomoulding, it has proven impossible to obtain coloured articles having smooth and even colouring by simply dry blending the pigments and the resin micropellets. Powders have also been tested without much success. The addition of pigment to the resin also altered its mechanical properties.

It was thus necessary to prepare a blend of resin and pigment in an extruder in order to produce coloured rotomoulded articles having smooth and even colouring. This additional extrusion step resulted in loss of time and money. It is also believed that some pigments have a nucleating effect on the structure of polyethylenes, which causes changes to the morphological features of the polymer which in turn may have a major effect on mechanical performance such as impact properties. The reason for this is that pigments with nucleating properties can affect the morphological development of the polymer during solidification. They provide crystallisation nuclei that initiate crystal growth in the polymer. Crystallisation rate changes as well as morphological changes may result in different shrinkage rates for these polymers. The resulting rotomoulded articles thus suffered from increased shrinkage and reduced impact strength. This is discussed for example in Keams et al. (Kearns, M.P., McCourt, M.P. and Ervik, R. in "The effect of pigment on rotomoulded polyethylene powder and micropellets". Presented at the 2005 Antec Conference in Boston.

There is thus a need to prepare coloured rotomoulded articles of acceptable quality that do not necessitate the additional extrusion step.

It is an aim of the present invention to prepare coloured rotomoulded articles that have a smooth and even colouring.

It is also an aim of the present invention to prepare coloured rotomoulded articles without preliminary extrusion step.

It is another aim of the present invention to prepare coloured rotomoulded articles having good impact strength and mechanical properties.

It is a further aim of the present invention to prepare coloured rotomoulded articles with reduced shrinkage and warpage.

Any one of these aims is at least partially fulfilled by the present invention.

Accordingly, the present invention provides coloured rotomoulded articles prepared from a dry blend of
- copolymer of ethylene prepared with a catalyst system based on a bridged bistetrahydroindenyl component and having a density of from 0.920 to 0.950 g/cc and a melt flow index M12 of from 1 to 20 dg/min additivated with at most 1 wt% of a polyether-block co-polyamide;
- up to 3 wt% of pigment

Preferably, the polyether-block co-polyamide additive is present in an amount of at least 0.001 wt% and at most 1 wt%, preferably of from 0.1 to 0.3 wt%. It is a densification agent.

Preferably, the amount of pigment is of from 0.05 to 1 wt%, preferably of from 0.10 to 0.5 wt%.

The usual additives, such as for example anti-UV and anti-oxidant can be added.

The copolymer of ethylene is prepared with a catalyst system comprising:
- a catalyst component of general formula R"(IndH₄)₂MQ₂ wherein (IndH₄) is a substituted or unsubstituted tetrahydroindenyl, R" is a structural bridge between the two tetrahydroindenyl groups, M is a metal Group 4 of the Periodic Table and Q is halogen or alkyl having from 1 to 6 carbon atoms;
- an activating agent having an ionising action.

Preferably both tetrahydroindenyl groups are unsubstituted.

Preferably, M is Zr.

Preferably Q is halogen, more preferably Cl.

Preferably the bridge is ethylene, Me₂Si or Ph₂C.

The preferred catalyst component is ethylene bistetrahydroindenyl zirconium dichloride (THI).

Any activating agent having an ionising action known in the art may be used for activating the metallocene component. For example, it can be selected from aluminium-containing or boron-containing compounds. The aluminium-containing compounds comprise aluminoxane, alkyl aluminium and/or Lewis acid. The aluminoxanes are preferred and may comprise oligomeric linear and/or cyclic alkyl aluminoxanes.

Suitable boron-containing activating agents that can be used comprise a triphenylcarbenium boronate such as tetrakis-pentafluorophenyl-borato-triphenylcarbenium as described in EP-A-0427696, or those of the general formula [L'-H] + [B Ar₁ Ar₂ X₃ X₄]- as described in EP-A-0277004 (page 6, line 30 to page 7, line 7).

The support, if present, can be a porous mineral oxide. It is advantageously selected from silica, alumina and mixtures thereof. Preferably it is silica.

An activating support can advantageously be used instead of activating agent.

The copolymers of ethylene that can be used in the present invention have a density in the range of from 0.920 to 0.950 g/cc, preferably of from 0.925 to 0.945 g/cc and more preferably in the range of 0.930 to 0.940 g/cc. The density is measured following the method of standard test ASTM D 1505 at 23°C.

The melt index of the polyethylene resin preferably used in the present invention typically falls in the range 1 to 20 dg/min, preferably in the range 1 to 10 dg/min, more preferably in the range of 1.5 to 8 dg/min and most preferably in the range 2 to 5 dg/min. The melt flow index MI2 is measured following the method of standard test ASTM D 1283 at a temperature of 190°C and a load of 2.16 kg.

The additive is a polyether-block co-polyamide. It may optionally be replaced by or mixed with a component selected from the group consisting of thermoplastic polyurethane, polyetherester, polyethylene glycol and fluoropolymer.

Polyether-block co-polyamides are represented by the general formula

HO-[C(O)-PA-C(O)-O-PEth-O]ₙ-H (I)

wherein PA represents the polyamide segment and PEth the polyether segment. For example the polyamide segment can be a PA 6, PA 66, PA 11 or a PA 12. The polyether segment can for example be a polyethylene glycol (PEG) or a polypropylene glycol (PPG) or a polytetramethylenglycol (PTMG). The molecular weight Mₙ of the polyamide sequence is usually between 300 and 15,000. The molecular weight Mₙ of the polyether sequence is usually between 100 and 6000. Such materials are commercially available for example from Arkema under the Pebax^{®} trade name.

The copolymers having polyamide blocks and polyether blocks are generally obtained from the polycondensation of polyamide blocks having reactive end groups with polyether blocks having reactive end groups, such as, *inter alia:*
1) polyamide blocks having diamine chain ends with polyoxyalkylene blocks having dicarboxylic chain ends;
2) polyamide blocks having dicarboxylic chain ends with polyoxyalkylene blocks having diamine chain ends, obtained by cyanoethylation and hydrogenation of aliphatic dihydroxylated α,ω-polyoxyalkylene blocks called polyetherdiols; and
3) polyamide blocks having dicarboxylic chain ends with polyetherdiols, the products obtained being, in this particular case, polyetheresteramides.

The polyamide blocks having dicarboxylic chain ends derive, for example, from the condensation of polyamide precursors in the presence of a chain-stopping carboxylic diacid.

The polyamide blocks having diamine chain ends derive, for example, from the condensation of polyamide precursors in the presence of a chain-stopping diamine.

The polymers having polyamide blocks and polyether blocks may also include randomly distributed units. These polymers may be prepared by the simultaneous reaction of the polyether and of the precursors of the polyamide blocks.

For example, a polyetherdiol, polyamide precursors and a chain-stopping diacid may be made to react together. A polymer is obtained which essentially has polyether blocks and polyamide blocks of very variable length, but in addition the various reactants that have reacted randomly, which are distributed in a random fashion along the polymer chain.

A polyether diamine, polyamide precursors and a chain-stopping diacid may also be made to react together. A polymer is obtained which has essentially polyether blocks and polyamide blocks of very variable length, but also the various reactants that have reacted randomly, which are distributed in a random fashion along the polymer chain.

The amount of polyether blocks in these copolymers having polyamide blocks and polyether blocks is advantageously from 10 to 70% and preferably from 35 to 60% by weight of the copolymer.

The polyetherdiol blocks may either be used as such and copolycondensed with polyamide blocks having carboxylic end groups, or they may be aminated in order to be converted into polyetherdiamines and condensed with polyamide blocks having carboxylic end groups. They may also be blended with polyamide precursors and a diacid chain stopper in order to make the polymers having polyamide blocks and polyether blocks with randomly distributed units.

The number-average molar mass Mₙ of the polyamide blocks is usually between 300 and 15,000. The mass Mₙ of the polyether blocks is usually between 100 and 6000.

As regards the polyetheresters, these are copolymers having polyester blocks and polyether blocks. They generally consist of soft polyether blocks, which are the residues of polyetherdiols, and of hard segments (polyester blocks), which usually result from the reaction of at least one dicarboxylic acid with at least one chain-extending short diol unit. The polyester blocks and the polyether blocks are generally linked by ester linkages resulting from the reaction of the acid functional groups of the acid with the OH functional groups of the polyetherdiol. The short chain-extending diol may be chosen from the group consisting of neopentyl glycol, cyclohexanedimethanol and aliphatic glycols of formula HO(CH₂)ₙOH in which n is an integer varying from 2 to 10. Advantageously, the diacids are aromatic dicarboxylic acids having from 8 to 14 carbon atoms. Up to 50 mol% of the dicarboxylic aromatic acid may be replaced with at least one other dicarboxylic aromatic acid having from 8 to 14 carbon atoms, and/or up to 20 mol% may be replaced with a dicarboxylic aliphatic acid having from 2 to 12 carbon atoms.

As examples of dicarboxylic aromatic acids, mention may be made of terephthalic, isophthalic, dibenzoic, naphthalenedicarboxylic acids, 4,4'-diphenylenedicarboxylic acid, bis(p-carboxyphenyl)methane acid, ethylenebis(p-benzoic acid), 1,4-tetramethylenebis(p-oxybenzoic acid), ethylenebis(paraoxybenzoic acid) and 1,3-trimethylene bis(p-oxybenzoic acid). As examples of glycols, mention may be made of ethylene glycol, 1,3-trimethylene glycol, 1,4-tetramethylene glycol, 1,6-hexamethylene glycol, 1,3-propylene glycol, 1,8-octamethylene glycol, 1,10-decamethylene glycol and 1,4-cyclohexylenedimethanol. The copolymers having polyester blocks and polyether blocks are, for example, copolymers having polyether blocks derived from polyether diols, such as polyethylene glycol (PEG), polypropylene glycol (PPG) or polytetramethylene glycol (PTMG), dicarboxylic acid units, such as terephthalic acid, and glycol (ethanediol) or 1,4-butanediol units. The chain-linking of the polyethers and diacids forms soft segments while the chain-linking of the glycol or the butanediol with the diacids forms the hard segments of the copolyetherester. Such copolyetheresters are disclosed in patents EP 402 883 and EP 405 227. These polyetheresters are thermoplastic elastomers. They may contain plasticizers.

Polyetheresters can for example be obtained from Du Pont Company under the Hytrel^{®} trademark.

As regards the polyurethanes, these in general consist of soft polyether blocks, which are usually residues of polyetherdiols, and hard blocks (polyurethanes), which may result from the reaction of at least one diisocyanate with at least one short diol. The short chain-extending diol may be chosen from the glycols mentioned above in the description of the polyether esters. The polyurethane blocks and polyether blocks are linked by linkages resulting from the reaction of the isocyanate functional groups with the OH functional groups of the polyether diol.

Thermoplastic polyurethanes can for example be obtained from Elastogran GmbH under the Elastollan^{®} trade name or from Dow Chemical Company under the Pellethane^{®} trade name.

Polyethylene glycols have the general formula

H-(OCH₂-CH₂-)ₙOH (I)

Polyethylene glycols are commercially available in a wide range of molecular weights and viscosities. Depending upon their molecular weights polyethylene glycols can be liquid or solid. The polyethylene glycols used in the present invention usually have an average molecular weight from 100 to 2000 g/mol and more preferably from 150 to 700 g/mol. Suitable polyethylene glycols can for example be obtained from Dow Chemical Company or BASF under the Carbowax^{®} and Pluriol E^{®} trade names.

The fluoropolymers suited as processing aid in the present invention are for example polymers of vinylidene fluoride (H₂C=CF₂) and/or copolymers of vinylidene fluoride and hexafluoropropylene (F₂C=CF-CF₃). Though the copolymers of vinylidene fluoride and hexafluoropropylene do not have elastomeric properties they are commonly referred to as "fluoroelastomers". The content of the comonomer hexafluoropropylene in a fluoroelastomer is usually in the range of 30 to 40 % by weight. Fluoropolymers suited as processing aids in the current invention are for example commercially available under the Dynamar^{®}, Viton^{®} and Kynar^{®} trade names from Dyneon, DuPont-Dow Elastomers or Arkema.

In this description, the term copolymer refers to the polymerisation product of one monomer and one or more comonomers. In the present invention, the monomer is ethylene and the one or more comonomers are alpha-olefins having 3 to 10 carbon atoms. Preferably, the comonomer is propylene, 1-butene or 1-hexene.

The coloured rotomoulded articles of the present invention are characterized by a smooth and even colouring.

The impact and mechanical properties of the finished article are not altered by the addition of pigments contrary to those of the prior art.

The rotomoulded parts all exhibit a ductile behaviour, even at temperatures as low as -40 °C and below.

### Examples.

Several resins were tested.

Resin R1 according to the present invention was prepared with a catalyst system based on ethylene bistetrahydroindenyl zirconium dichloride.

Resins R2 to R5 are commercial resins known for their good impact properties. Resin R2 is a metallocene-prepared resin sold bt Borealis under the trade name RM8343.

Resin R3 is a Ziegler-Natta resin sold by Dow Chemicals under the trade name Dowlex 2631.

Resin R4 is a Ziegler-Natta resin sold by Dow Chemicals under the trade name Dowlex 2629.

Resin R5 is a Ziegler-Natta resin sold by Dow Chemicals under the trade name Dowlex NG2432.

Their properties are summarised in Table I.

**TABLE I.**

| | R1 | R2 | R3 | R4 | R5 |
|---|---|---|---|---|---|
| Catalyst | THI | metallocene | ZN | ZN | ZN |
| Comonomer | 1-hexene | 1-hexene | 1-hexene | 1-hexene | octene |
| MI2 dg/min | 2.7 | 6 | 6.7 | 4.48 | 4 |
| Density g/cc | 0.934 | 0.934 | 0.935 | 0.9358 | 0.94 |

For all tested samples, 0.3 wt% of green or black pigment were added by turbo-blending at rotational speed of 1400 rpm with a cut-off temperature of 60 °C.

Green pigments had Hampton colour reference HC 12700 C.

Black pigments had Hampton colour reference HC 14744 B.

Resin R1 was additivated with 0.15 wt% of Pebax®, based on the total weight of the blend.

All test mouldings were carried out on a ROTOSPEED rotational moulding machine. It is a carrousel-style machine with offset arm, LPG burner arm with a burner capacity of 523 kW/hr, air fan cooling, and a maximum plate diameter of 1.5 m.

A 30x30x30 cm aluminum box mould was used to produce the test mouldings. The mould was equipped with a draft angle to facilitate demoulding and the articles were prepared by the use of a drop box. The drop box was filled with the material needed and then attached to the lid of the mould. A pneumatic ram in the drop box held the material in place until the required temperature was reached, the ram was then activated and the material was dropped in.

The moulding conditions for the trials were as follows:
- oven temperature: 300 °C
- rotation ratio: 4:1
- cooling medium: forced air
- preheated arm and mould
- rotolog unit n°5/ rotolog software version 2.7
- peak internal air temperature (PIAT): 200 °C.

They were tested for impact using the method of standard test ISO 6602-3. This is a falling weight test that gives the resistance to shock. The tests were carried out respectively at temperatures of -20 °C and -40 °C. The test results were obtained on an average of at least 5 samples.

Modes of failure during impact testing fall into two categories: brittle and ductile. With brittle failure, a crack initiates and propagates prior to any bulk yielding of the specimen and hence the point of failure lies on the initial rising portion of the load/deformation curve. In the case of ductile failure, considerable yielding takes place and the failure occurs well after the maximum on the load/deformation curve. As the area under the load/deformation curve is a measure of the fracture energy, it follows that brittle failure is associated with very low absorbed energy as compared to ductile failure. The ductility index is defined by the ratio Eₚᵣₒₚ/Eₜₒₜ wherein total energy Eₜₒₜ is the sum of peak energy Eₚₑₐₖ and propagation energy Eₚᵣₒₚ. A ductility index smaller than 40 % is indicative of a brittle behaviour. If it is larger than 40 % the resin exhibits a ductile behaviour.

The samples used for impact tests were all taken from the same side of each trial moulding so that the results were made comparable to the moulding conditions. They were cut with a bandsaw into squares of 60 mm x 60 mm, the edges were cleaned of burrs and the thickness at the centre of each sample was noted. The machine used was the CEAST Fractovis and depending upon the thickness and the expected strength of the sample under test, the sensitivity and the working range of the load cell were appropriately set up to sense the sample failure.

The impact results recorded at a temperature of -20 °C are reported in Table II. Those recorded at a temperature of -40 °C are reported in Table III.

**TABLE II.**

| Resin | Pigment | Wall thickness mm | Peak energy J | Total energy J | Ductility index % |
|---|---|---|---|---|---|
| R1 | green | 5 | 34.06 | 57.18 | 40.4 |
| R2 | green | 5 | 30.6 | 48.87 | 37.6 |
| R5 | green | 4.5 | 13.01 | 16.17 | 18.9 |
| R1 | black | 5 | 28.14 | 47.6 | 40.9 |
| R3 | black | 4.5 | 34.7 | 59.15 | 41.3 |
| R4 | black | 4.5 | 34.03 | 58.64 | 41.8 |

**TABLE III.**

| Resin | Pigment | Wall thickness mm | Peak energy J | Total energy J | Ductility index % |
|---|---|---|---|---|---|
| R1 | green | 5 | 35.26 | 58.57 | 40 |
| R2 | green | 5 | 17.05 | 22.03 | 21.6 |
| R5 | green | 4.5 | 17.91 | 21.18 | 15.7 |
| R1 | black | 5 | 29.96 | 55.44 | 46.1 |
| R3 | black | 4.5 | 31.28 | 50.42 | 34.1 |
| R4 | black | 4.5 | 24.97 | 38.84 | 32.4 |
| R1 | none | 7 | 61.98 | 116.36 | 46.5 |
| R1 | green | 7 | 59.19 | 117.76 | 47.9 |

### List of figures.

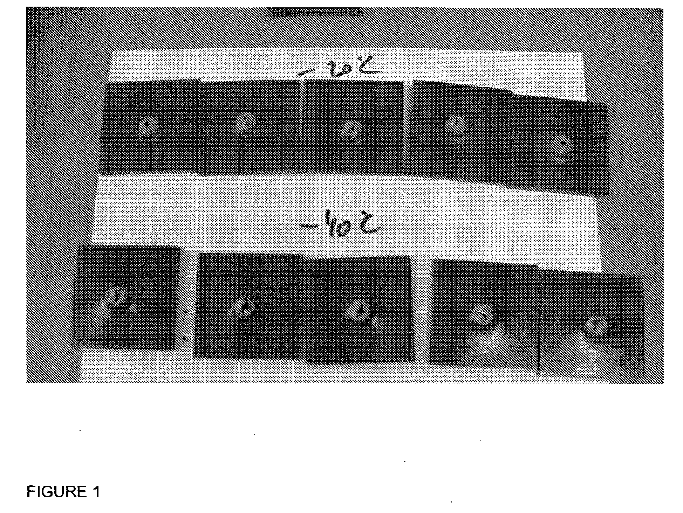

Figure 1 represents 5 rotomoulded samples prepared from dry blends of resin R1 and green pigment after impact test respectively at temperatures of -20 °C and -40 °C.

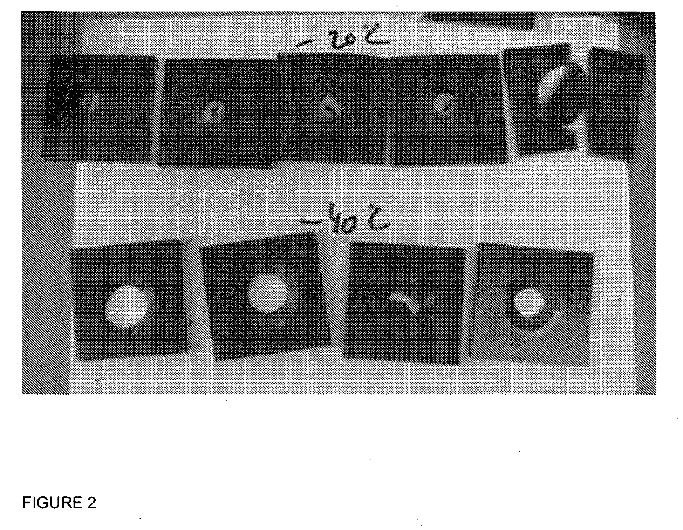

Figure 2 represents 5 rotomoulded samples prepared from dry blends of resin R2 and green pigment after impact test respectively at temperatures of -20 °C and -40 °C.

It can be seen that several samples prepared with resin R2 had a brittle behaviour even at a temperature of -20 °C whereas all the samples prepared with resin R1 had a ductile behaviour down to a temperature of -40 °C and below.

## Claims

1. A coloured rotomoulded article prepared from a dry blend of
- copolymer of ethylene prepared with a catalyst system based on a bridged bistetrahydroindenyl component and having a density of from 0.920 to 0.950 g/cc and a melt flow index MI2 of from 1 to 20 dg/min;
- from 0.001 to at most 1 wt% of a polyether-block co-polyamide;
- up to 3 wt% of pigment

2. The coloured rotomoulded article of claim 1 therein the copolymer of ethylene has a density 0.925 to 0.945 g/cc of from and a melt flow index of from 1.5 to 8 dg/min.

3. The coloured rotomoulded article of claim 1or claim 2 wherein the amount of polyether-block co-polyamide is of from 0.1 to 0.3 wt%.

4. The coloured rotomoulded article of any one of claims 1 to 3 wherein the amount of pigment is of from 0.10 to 0.50 wt%.

5. The coloured rotomoulded article of any one of the preceding claims wherein the pigment and the polyethylene resin are dry blended by turbo-blending.

6. The coloured rotomoulded article of any one of claims 1 to 4 wherein the dry blend of pigment and polyethylene resin is prepared by a low-shear method.

7. The coloured rotomoulded article of any one of the preceding claims wherein the bistetrahydroindenyl component is ethylene bistetrahydroindenyl zirconium dichloride.

8. Use of the dry blend according to any one of claims 1 to 6 to prepare coloured rotomoulded articles that have impact strength comparable to that of uncoloured rotomoulded articles.

9. Use of the dry blend according to any one of claims 1 to 6 to prepare coloured rotomoulded articles that have a ductile behaviour down to a temperature of -40 °C and below.

10. Use of the dry blend according to any one of claims 1 to 6 to prepare coloured rotomoulded articles with even colouring.

11. Coloured fuel tanks prepared with the blend of any one of claims 1 to 7.

## Patentansprüche

1. Farbiger rotationsgeformter Gegenstand, hergestellt aus einer trockenen Mischung aus:
Ethylencopolymer, hergestellt mit einem Katalysatorsystem, basierend auf einer verbrückten Bis-tetrahydroindenyl-Komponente und mit einer Dichte zwischen 0,920 und 0,950 g/cc und einem Schmelzflussindex MI2 zwischen 1 und 20 dg/min;
- zwischen 0, 001 und höchstens 1 Gew.% eines Polyether-Block-Copolyamids;
- bis zu 3 Gew.% Pigment

2. Farbiger rotationsgeformter Gegenstand nach Anspruch 1, wobei das Ethylencopolymer eine Dichte zwischen 0,925 und 0,945 g/cc und einen Schmelzflussindex zwischen 1,5 und 8 dg/min aufweist.

3. Farbiger rotationsgeformter Gegenstand nach Anspruch 1 oder Anspruch 2, wobei die Menge des Polyether-Block-Copolyamids zwischen 0,1 und 0,3 Gew.% liegt.

4. Farbiger rotationsgeformter Gegenstand nach einem der Ansprüche 1 bis 3, wobei die Menge des Pigments zwischen 0,10 und 0,50 Gew.% liegt.

5. Farbiger rotationsgeformter Gegenstand nach einem der vorhergehenden Ansprüche, wobei das Pigment und das Polyethylenharz durch Turbomischen trocken gemischt sind.

6. Farbiger rotationsgeformter Gegenstand nach einem der Ansprüche 1 bis 4, wobei die Trockenmischung aus Pigment und Polyurethanharz durch ein Verfahren mit geringer Scherkraft hergestellt ist.

7. Farbiger rotationsgeformter Gegenstand nach einem der vorhergehenden Ansprüche, wobei die Bis-tetrahydroindenyl-Komponente Ethylen-Bis-tetrahydroindenyl-Zirconiumdichlorid ist.

8. Verwendung der Trockenmischung nach einem der Ansprüche 1 bis 6, um farbige rotationsgeformte Gegenstände herzustellen, die eine Schlagfestigkeit aufweisen, die mit derjenigen von nicht farbigen rotationsgeformten Gegenständen vergleichbar ist.

9. Verwendung der Trockenmischung nach einem der Ansprüche 1 bis 6, um farbige rotationsgeformte Gegenstände herzustellen, die ein Dehnverhalten bis hinunter zu einer Temperatur von -40 °C und darunter aufweisen.

10. Verwendung der Trockenmischung nach einem der Ansprüche 1 bis 6, um farbige rotationsgeformte Gegenstände mit einer gleichmäßigen Färbung herzustellen.

11. Farbige Treibstofftanks, hergestellt mit der Mischung eines der Ansprüche 1 bis 7.

## Revendications

1. Article rotomoulé coloré préparé à partir d'un mélange sec
- d'un copolymère d'éthylène préparé avec un système catalytique basé sur un composant bistétrahydroindényle ponté et ayant une densité de 0,920 à 0,950 g/cm' et un indice de fluidité MI2 de 1 à 20 dg/min ;
- de 0,001 à au plus 1% en poids d'un copolymère à blocs de polyéther et de polyamide ;
- d'un pigment dans une quantité pouvant atteindre 3% en poids.

2. Article rotomoulé coloré selon la revendication 1, dans lequel le copolymère d'éthylène a une densité de 0,925 à 0,945 g/cm³ et un indice de fluidité de 1,5 à 8 dg/min.

3. Article rotomoulé coloré selon la revendication 1 ou la revendication 2, dans lequel la quantité de copolymère à blocs de polyéther et de polyamide est de 0,1 à 0,3% en poids.

4. Article rotomoulé coloré selon l'une quelconque des revendications 1 à 3, dans lequel la quantité de pigment est de 0,10 à 0,50 % en poids.

5. Article rotomoulé coloré selon l'une quelconque des revendications précédentes, dans lequel le pigment et la résine de polyéthylène sont mélangés à sec par turbomélange.

6. Article rotomoulé coloré selon l'une quelconque des revendications 1 à 4, dans lequel le mélange sec de pigment et de résine de polyéthylène est préparé par un procédé à faible contrainte de cisaillement.

7. Article rotomoulé coloré selon l'une quelconque des revendications précédentes, dans lequel le composant bistétrahydroindényle est du dichlorure d'éthylène bistétrahydroindényl zirconium.

8. Utilisation du mélange sec selon l'une quelconque des revendications 1 à 6 pour préparer des articles rotomoulés colorés ayant une résistance au choc comparable à celle des articles rotomoulés non colorés.

9. Utilisation du mélange sec selon l'une quelconque des revendications 1 à 6 pour préparer des articles rotomoulés colorés ayant un comportement ductile jusqu'à une température de -40°C ou moins.

10. Utilisation du mélange sec selon l'une quelconque des revendications 1 à 6 pour préparer des articles rotomoulés colorés ayant une coloration homogène.

11. Réservoirs de carburant colorés préparés avec le mélange selon l'une quelconque des revendications 1 à 7.
